Europäisches Patentamt

European Patent Office

Office européen des brevets

(11) Veröffentlichungsnummer: **0 067 403**
**B1**

## (12) EUROPÄISCHE PATENTSCHRIFT

(45) Veröffentlichungstag der Patentschrift:
08.05.85

(51) Int. Cl.⁴: **F 16 K 5/06**

(21) Anmeldenummer: 82105008.5

(22) Anmeldetag: 08.06.82

(54) **Hahn mit Kugelküken.**

(30) Priorität: 13.06.81 DE 3123549

(43) Veröffentlichungstag der Anmeldung:
22.12.82 Patentblatt 82/51

(45) Bekanntmachung des Hinweises auf die Patenterteilung:
08.05.85 Patentblatt 85/19

(84) Benannte Vertragsstaaten:
**DE FR GB IT SE**

(56) Entgegenhaltungen:
**US - A - 2 890 856**
**US - A - 3 371 907**
**US - A - 3 458 172**
**US - A - 4 272 054**

(73) Patentinhaber: **Klinger AG, Baarerstrasse 10,
CH-6301 Zug (CH)**

(72) Erfinder: **Huber, Richard, Dipl.-Ing., Fürstenstrasse 176,
A-2340 Mödling b. Wien (AT)**

(74) Vertreter: **Dipl.-Ing. H. Marsch Dipl.-Ing. K. Sparing
Dipl.-Phys.Dr. W.H. Röhl Patentanwälte,
Rethelstrasse 123, D-4000 Düsseldorf (DE)**

## Beschreibung

Die Erfindung betrifft einen Hahn mit Kugelküken nach dem Oberbegriff des Anspruchs 1.

Es sind Kugelhähne mit PTFE-Dichtelementen bekannt, von welchen mindestens eines aus einem federnden, sich unter axialer Vorspannung an das Kugelküken anlegenden, mit Betriebsdruck beaufschlagbaren Dichtteil und einem koaxialen Lagerteil besteht, welcher den sich unter Betriebsdruck ergebenden, den Dichtteil verformenden Axialweg des Kugelkükens begrenzt.

Aufgabe der Erfindung ist es, einen metallisch dichtenden Kugelhahn zu schaffen, der ohne Temperaturbegrenzung bei relativ kleinem Betätigungsmoment gut absperrt.

Diese Aufgabe wird dadurch gelöst, daß das ringförmige Dichtelement als dünnwandiger metallischer Körper ausgebildet ist, der an einem Rand mit dem Hahngehäuse dicht verbunden ist und zwei ringförmige koaxiale Abschnitte aufweist, von welchen einer als verformbarer Dichtteil und der andere als fester, durch das Gehäuse abgestützter Lagerteil ausgebildet ist.

Die Erfindung geht aus von dem Gedanken, einen dünnwandigen metallischen Körper als Dichtelement zu verwenden, der — zum Teil unterstützt — den Lagerteil und — zum Teil nicht unterstützt — den verformbaren Dichtteil bildet. An sich bekannt ist hiervon, ein ringförmiges Dichtelement als dünnwandigen metallischen Körper auszubilden und an einem Rand mit dem Hahngehäuse dicht zu verbinden (US-A-2 890 856).

Bei der erfindungsgemäßen Bauweise ist die Ausbildung eines Kugelhahnes mit ungelagerter Kugel möglich, weil die Kugel während des größten Teils der Öffnungs- bzw. Schließbewegung nur zwischen den verformbaren Dichtteilen der Dichtelemente gelagert ist und daher relativ leicht geschaltet werden kann. Erst wenn in Schließstellung eine größere Druckdifferenz auf die Kugel einwirkt, stützt sie sich am unbeweglichen Lagerteil ab, was mit einem größeren Reibungswiderstand verbunden ist. Dies kann auch bei Bauweisen mit gelagerter Kugel von Vorteil sein, bei welchen eine einfache Lagerung vorgesehen ist, die eine gewisse Axialverschiebung der Kugel unter Druckdifferenz zuläßt. Die größte Elastizität des Dichtteiles wird man dann erreichen, wenn er am freien Rand des dünnwandigen Körpers ausgebildet ist und/oder wenn er bei sehr leicht verformbarer Ausbildung federnd, beispielsweise mittels einer Tellerfeder, am Gehäuse abgestützt ist. Auf diese Weise ist nämlich gewährleistet, daß die Kugel keinesfalls beim Einbau zwischen den beiden Dichtteilen zu fest eingespannt ist. Der Dichtteil muß nur so stark unter axialer Vorspannung an dem Kugelküken anliegen, daß sich in Schließstellung ein Druck aufbauen kann, welcher den Dichtteil dann stärker an die Kugel andrückt.

Diese axiale Vorspannung kann dann besonders klein gehalten werden, wenn der Dichtteil mit Linienberührung an der Kugel anliegt. Eine zusätzliche Abdichtung im Durchgang ergibt sich, wenn auch der Lagerteil zur Kugel hin dichtend ausgebildet ist, wobei zur Erzielung einer besonders guten Abdichtung vorteilhaft der Lagerteil mit Linienberührung an der Kugel anliegt.

Weitere Ausgestaltungen der Erfindung sind der nachfolgenden Beschreibung und den Unteransprüchen zu entnehmen.

Die Erfindung wird nun anhand der in den beigefügten Abbildungen dargestellten Ausführungsbeispiele näher erläutert.

Fig. 1 zeigt einen erfindungsgemäßen Kugelhahn im Aufrißschnitt,

Fig. 2 zeigt in einem vergrößerten Ausschnitt ein Dichtelement für den Kugelhahn von Fig. 1,

Fig. 3 und 4 zeigen weitere Ausführungsformen der Erfindung.

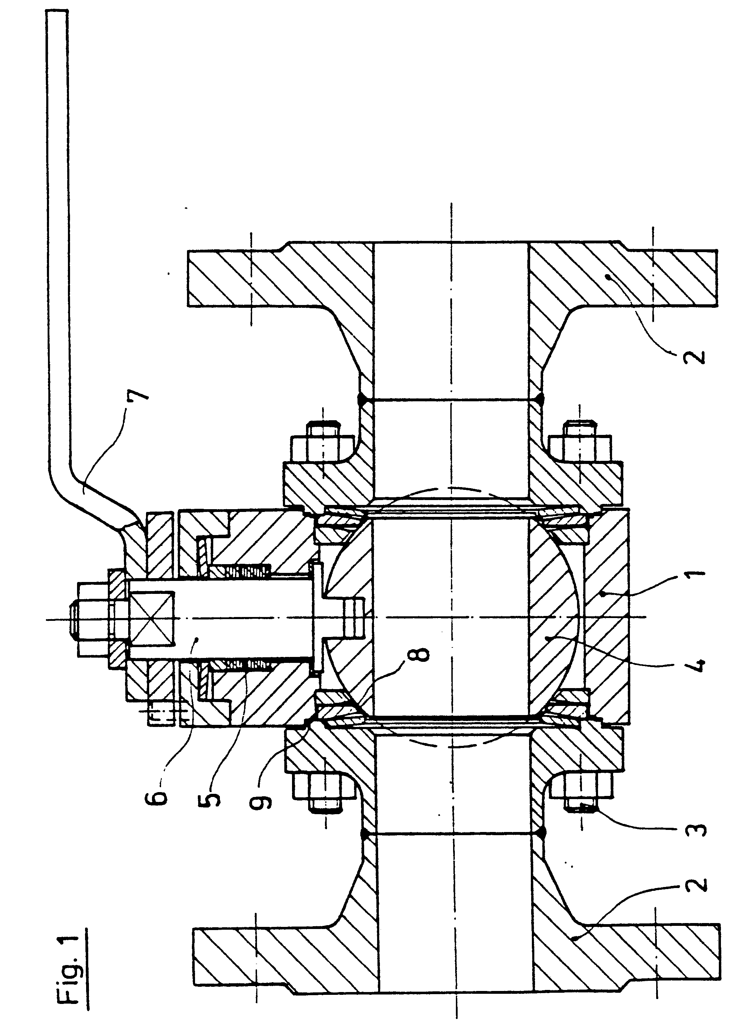

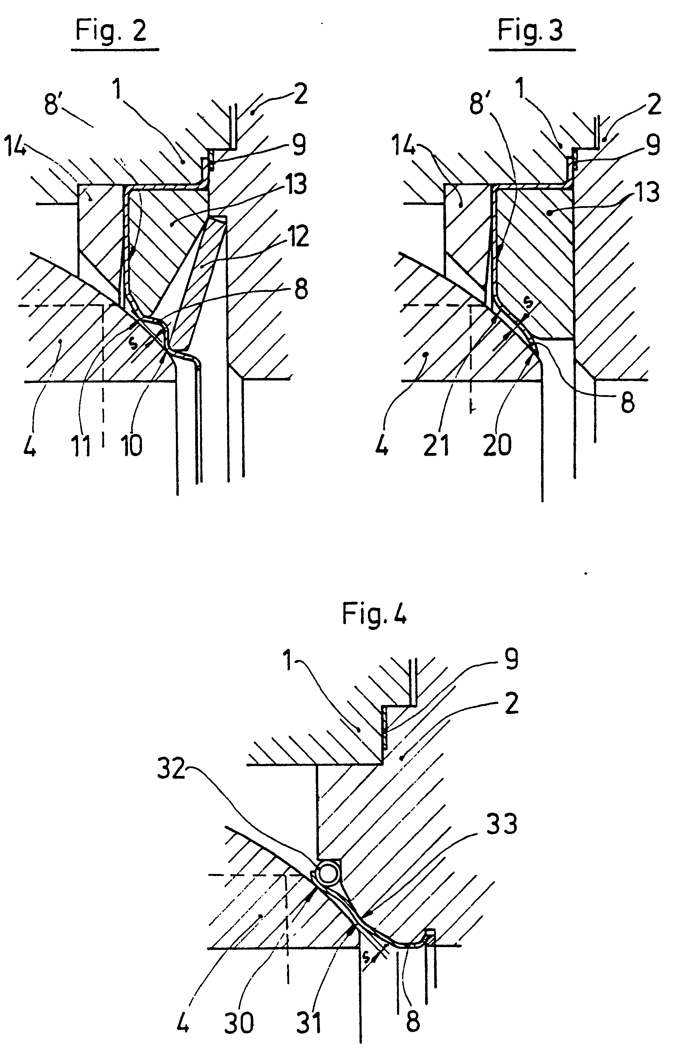

Der in Fig. 1 dargestellte Kugelhahn besteht aus einem Gehäusemittelstück 1 und beidseits anschließenden Flanschstutzen 2, die mit Schrauben 3 zu einem Gehäuse zusammengehalten werden. Im Gehäusemittelstück 1 ist eine Kugel 4 angeordnet, die über einem mittels einer Stopfbüchse 5 abgedichteten Bewegungsbolzen 6 mittels eines Handhebels 7 betätigbar ist. Die Kugel 4 ist zwischen zwei Dichtelementen 8, die aus Blech geformt sind, drehbar gelagert. Der Außenrand der Dichtelemente 8 ist zwischen dem Gehäusemittelstück 1 und dem Flanschstutzen 2 unter Zwischenschaltung einer Dichtung 9 eingeklemmt. Wie aus Fig. 2 im Detail ersichtlich ist, weist das Dichtelement 8 zwei gegen die Kugel 4 hin gerichtete Wülste 10, 11 auf. Solange kein Differenzdruck an der Kugel 4 auftritt, steht nur der innere Wulst 10 als Dichtteil mit der Kugel 4 in Verbindung, wobei eine auf die Rückseite des Dichtelements 8 wirkende Tellerfeder 12 dafür sorgt, daß dieser Dichtteil einerseits mit genügender Pressung unter Linienberührung an der Kugel 4 anliegt, ohne daß andererseits zu hohe, die Kugel 4 verklemmende Kräfte auftreten können. Der außenliegende Wulst 11 als Lagerteil ist durch einen Lagerring 13 an der Rückseite gegen das Gehäuse hin abgestützt, an der Vorderseite weist er in dem dargestellten druckausgeglichenen Zustand einen Abstand zur Kugel 4 auf; dieser ist normalerweise einige Zehntel kleiner als ein Millimeter. Falls nun bei Durchströmung des Hahnes die Kugel 4 gegen die Schließstellung gedreht wird, tritt erst dann eine Druckdifferenz auf, wenn eine erhebliche Drosselung der Strömung erfolgt, was zumeist erst knapp vor dem völligen Abschluß der Fall ist. Sobald dann die Druckdifferenz auftritt, verschiebt sich die Kugel 4 stromabwärts, bis sie auf dem abgestützten außenliegenden Wulst 11 des stromabwärts liegenden Dichtelements 8 aufsitzt. Der zugehörige innenliegende Wulst 10 hat sich unter weiterer Vorspannung der Tellerfeder 12 mit der Kugel 4 mitbewegt, so daß beide Wülste 10, 11, d. h. sowohl der Dichtteil als auch der Lagerteil zwischen Kugel 4 und Gehäuse abdichten. Da sich am anderen stromauf liegenden Dichtelement 8 beide Wülste 10, 11 infolge der Druckbeaufschlagung unter Verformung des radialen Abschnittes 8' des Dichtelements 8 mit der Kugel 4 mitbewegt haben, liegt der Wulst 10 als Dichtteil dieses Dichtelements 8 wie bisher unter Druckbeaufschlagung an der Kugel 4 an, so daß der Durchgang mit drei hintereinander geschalteten Abdichtungslinien gesperrt ist. Dabei verhindert eine im Gehäusemittelstück 1 eingelassene Stützscheibe 14 eine unzulässige Auswölbung des radialen Abschnitts 8'. Beim anschließenden Verdrehen der Kugel 4 in Öffnungsrichtung gleitet die Kugel 4 an dem die Druckkräfte aufnehmenden Lagerteil, bis der Durchgang so weit freigegeben ist, daß ein Druckausgleich zwischen Ein- und Ausströmseite des Hahnes zum Großteil hergestellt ist. Dann kann die Tellerfeder 12 des stromabwärts liegenden Dichtelementes 8 die Kugel 4 gegen ihre Mittelstellung bewegen, so daß bei der anschließenden Weiterbewegung in Öffnungsrichtung die Kugel 4 nur mehr zwischen den inneren Wülsten 10 als Dichtteilen gelagert ist. Die ungelagerte Kugel 4 ist in keiner Stellung durch die Dichtelemente 8 eingeklemmt, weil die notwendigen Abdichtkräfte durch die auf die Kugel 4 bzw. direkt auf die Dichtelemente 8 einwirkende Druckbeaufschlagung gegeben sind.

Fig. 3 zeigt ein Dichtelement für einen Kugelhahn, das einen außenliegenden Abschnitt 21 als Lagerteil mit breiter Kontaktfläche zur Kugel 4 aufweist und dessen Dichtteil direkt durch eine Kante 20 am Innenrand gebildet ist.

Fig. 4 zeigt ein Dichtelement 8, das an seinem Innenrand über einen Klemmring mit dem Flanschstutzen 2 des Gehäuses fest verbunden ist, wobei der vom Gehäuse unterstützte innere Abschnitt 31 als Lagerteil und der anschließende äußere Abschnitt 30 als Dichtteil ausgebildet sind. Zwischen dem äußeren Abschnitt 30 und dem Flanschstutzen 2 ist eine durch Verformung ihrer Dicke vorgespannte Spiralfeder 32 vorgesehen, welche in der dargestellten Ruhelage den Außenabschnitt 30 des dünnwandigen Dichtelements 8 gegen die Kugel 4 drückt. Bei dieser Ausführungsform kann nur das jeweils stromab liegende Dichtelement 8 zur Wirkung kommen, weil beim stromauf liegenden Dichtelement 8 der als Dichtteil ausgebildete Abschnitt 33 abgehoben wird. Es herrscht also im Raum zwischen den beiden Dichtelementen 8 voller Betriebsdruck, welcher den Außenabschnitt 33 des stromab gelegenen Dichtelementes 8 stärker gegen die Kugel 4 anpreßt. Bei Auftreten einer Druckdifferenz nahe oder in Schließstellung wird die Kugel 4 unter Überwindung des bestehenden Abstands S gegen den stromab vom Gehäuse abgestützten Lagerteil 31 gepreßt. Da die Gehäuseunterstützung 33 eine Abrundung aufweist, kommt sie gegen die Kugel 4 nur an einer Linie zur Wirkung, wodurch sich auch dort unter Druckbeaufschlagung eine Abdichtung ergibt. Es sind also bei dieser Bauweise zwei Abdichtungslinien wirksam; auch in diesem Fall tritt aber das durch die Druckdifferenz bedingte Drehmoment unter Abstützung am Lagerteil 31 nur bei einem kleinen Teil der Schwenkbewegung auf.

Die dargestellten Beispiele des Kugelhahnes zeigen, daß auch bei ungelagerter Kugel 4 relativ geringe Betätigungsdrehmomente erzielbar sind, wobei die Abdichtung über mehrere hintereinandergeschaltete Dichtbereiche erfolgt; Oberflächenbehandlungen der als dünnwandige Körper ausgebildeten Dichtelemente 8 und/oder der Kugel 4 können die Auswirkungen der erfindungsgemäßen Ausbildung noch vergrößern.

## Patentansprüche

1. Hahn mit Kugelküken, das zwischen zwei den Ein- und Auslaßkanal abdichtenden ringförmigen Dichtelementen (8) gelagert ist, von welchen mindestens eines aus einem federnden, sich unter axialer Vorspannung an das Kugelküken (4) anliegenden Dichtteil (10) und einem koaxialen Lagerteil (11) besteht, welcher den sich unter Betriebsdruck ergebenden, den Dichtteil (10) verformenden Axialweg des Kugelkükens (4) begrenzt, dadurch gekennzeichnet, daß das ringförmige Dichtelement (8) als dünnwandiger metallischer Körper ausgebildet ist, der an einem Rand mit dem Hahngehäuse dicht verbunden und in den benachbart zwei ringförmige, koaxiale Abschnitte (10, 11; 20, 21; 30, 31) eingeformt sind, von welchen einer als verformbarer Dichtteil und der andere als fester, durch das Gehäuse abgestützter Lagerteil ausgebildet ist.

2. Hahn nach Anspruch 1, dadurch gekennzeichnet, daß der Dichtteil am freien Rand des Dichtelements (8) ausgebildet ist.

3. Hahn nach Anspruch 1 oder 2, dadurch gekennzeichnet, daß der Dichtteil federnd, z. B. mittels einer Tellerfeder, am Gehäuse abgestützt ist.

4. Hahn nach einem der Ansprüche 1 bis 3, dadurch gekennzeichnet, daß der Dichtteil mit Linienberührung an der Kugel (4) anliegt.

5. Hahn nach einem der Ansprüche 1 bis 4, dadurch gekennzeichnet, daß der Lagerteil zur Kugel (4) hin dichtend ausgebildet ist, insbesondere in Form einer Linienberührung.

6. Hahn nach einem der Ansprüche 1 bis 5, dadurch gekennzeichnet, daß das Dichtelement (8) am Außenrand mit dem Gehäuse verbunden ist und an seinem Innenrand den Dichtteil bildet.

7. Hahn nach Anspruch 6, dadurch gekennzeichnet, daß das Dichtelement zwischen Außenrand und Lagerteil einen etwa radialen, ebenso wie den Dichtteil mit Druck beaufschlagbaren Ringteil aufweist.

## Claims

1. Valve having a ball plug that is mounted between two annular sealing elements (8) which seal the inlet and outlet channels and at least one of which comprises a resilient sealing member (10) that rests against the ball plug (4) under axial bias and a coaxial bearing member (11), which limits the axial travel of the ball plug (4), which travel is produced under the operating pressure, and deforms the sealing member (10), characterised in that the annular sealing element (8) is designed as a thin-walled metal body which is tightly connected by one edge to the valve housing and in which two adjacent annular coaxial steps (10, 11; 20, 21; 30, 31) are moulded, of which one is designed as a deformable sealing member and the other as a fixed bearing member supported by the housing.

2. Valve according to claim 1, characterised in that the sealing member is formed at the free edge of the sealing element (8).

3. Valve according to claim 1 or 2, characterised in that the sealing member is supported on the housing in a resilient manner, for example by means of a cup spring.

4. Valve according to any one of claims 1 to 3, characterised in that the sealing member rests against the ball (4) with line contact.

5. Valve according to any one of claims 1 to 4, characterised in that the bearing member is designed to have a sealing action with respect to the ball (4), especially in the form of line contact.

6. Valve according to any one of claims 1 to 5, characterised in that the sealing element (8) is connected to the housing by its outside edge and, on its inside edge, forms the sealing member.

7. Valve according to claim 6, characterised in that the sealing element has between the outside edge and the bearing member an approximately radial annular member which, like the sealing member, can be subjected to pressure.

**Revendications**

1. Robinet à boisseau sphérique monté entre deux éléments d'étanchéité annulaires (8) disposés à l'endroit du passage d'entrée et du passage de sortie du robinet; l'un au moins de ces éléments d'étanchéité comportant un organe d'étanchéité élastique (10) s'appliquant contre le boisseau sphérique (4) grâce à un effet de précontrainte axiale, et un organe coaxiale d'appui (11), analogue à un palier, adapté à limiter le déplacement axial du boisseau sphérique (4) sollicité par la pression de service du robinet qui provoque la déformation de l'organe d'étanchéité (10), caractérisé en ce que l'élément d'étanchéité annulaire (8) est constitué par une pièce métallique à paroi mince, ayant une bordure liée de manière étanche au boîtier du robinet, et présentant à proximité deux parties annulaires coaxiales (10, 11; 20, 21; 30, 31), réalisées par formage de la pièce métallique à paroi mince; l'une de ces deux parties annulaires constituan l'organe d'étanchéité déformable, et l'autre partie constituant l'organe d'appui analogue à un palier, qui est fixe et repose sur le boîtier du robinet.

2. Robinet selon la revendication 1, caractérisé en ce que l'organe d'étanchéité est réalisé sur le bord libre de l'élément d'étanchiété (8).

3. Robinet selon l'une des revendications 1 ou 2, caractérisé en ce que l'organe d'étanchéité est soutenu élastiquement par le boîtier du robinet, par exemple par l'intermédiaire d'une coupelle élastique.

4. Robinet selon l'une quelconque des revendications 1 à 3, caractérisé en ce que l'organe d'étanchéité est en appui sur le boisseau sphérique (4), suivant une ligne de contact.

5. Robinet selon l'une quelconque des revendications 1 à 4, caractérisé en ce que l'organe d'appui analogue à un palier est réalisé de manière à venir en contact étanche contre le boisseau sphérique (4), notamment suivant une ligne de contact.

6. Robinet selon l'une quelconque des revendications 1 à 5, caractérisé en ce que l'élément d'étanchéité (8) est relié de manière étanche au boîtier du robinet par sa bordure extérieure, la bordure interne de cet élément constituant l'organe d'étanchéité.

7. Robinet selon la revendication 6, caractérisé en ce que l'élément d'étanchéité (8), entre sa bordure externe et l'organe d'appui analogue à un palier, présente une partie annulaire sensiblement radiale soumise à l'effet de la pression comme l'organe d'étanchéité.

Fig. 1

Fig. 2

Fig. 3

Fig. 4